# EUROPEAN PATENT SPECIFICATION

(11) **EP 3 528 446 B1**
(45) Date of publication and mention of the grant of the patent: **30.12.2020**
(21) Application number: 18156604.3
(22) Date of filing: 14.02.2018
(51) Int. Cl.: H04L 27/26, H04L 25/02

(54) **RECEPTION OF REFERENCE SIGNALS IN A COMMUNICATION SYSTEM USING VARIOUS FFT-LENGTHS**
EMPFANG VON REFERENZSIGNALEN IN EINEM KOMMUNIKATIONSSYSTEM MIT VERSCHIEDENEN FFT-LÄNGEN
RÉCEPTION DE SIGNAUX DE RÉFÉRENCE DANS UN SYSTÈME DE COMMUNICATION UTILISANT DIVERSES LONGUEURS FFT

(43) Date of publication of application: 21.08.2019
(73) Proprietor: Nokia Technologies Oy, 02610 Espoo (FI)
(72) Inventor: RHEINSCHMITT, Rupert, 70825 Korntal (DE); FUCHS, Rolf, 67105 Schifferstadt (DE)
(74) Representative: Nokia EPO representatives

(56) References cited:
- WO-A1-2017/038741

## Description

### TECHNICAL FIELD

The present invention relates generally to an apparatus, a method and a computer program for reception of reference signals in a communication system using various FFT-lengths. Document WO2017/038741A1 describes communication system that has a plurality of parameter sets which constitute radio frames. Signal configuration of each synchronization signal transmitted from the communication system is the same, regardless of the parameter sets which constitute the radio frame.

### BACKGROUND

Embodiments of the invention relate to wireless or mobile communications networks, such as, but not limited to, Long Term Evolution, LTE, and/or 5G radio access technology, which may also be called as New Radio, NR, access technology. Since its inception, LTE has seen extensive deployment in a wide variety of contexts involving the communication of data and 3^{rd} Generation Partnership Project, 3GPP, still develops LTE. Similarly, 3GPP also currently develops the standard for 5G/NR. The goal of the 3GPP is, in general, to further develop and improve wireless cellular systems.

One of the topics in the 3GPP discussions related to 5G/NR is the use of various Fast Fourier Transform, FFT, -lengths. FFT-length may also be called as a size of a FFT-processor. In many wireless systems Orthogonal Frequency Division Multiplexing, OFDM, is used but often only one FFT-length is used in one OFDM system. However, for example in Worldwide Interoperability for Microwave Access, WiMAX, systems various FFT-lengths may be used. Also in case of 5G/NR standard, or some other future standard, it may be desirable to bring more flexibility by using various FFT-lengths.

Channel estimation is based on reference signals in many communication systems. Data of the reference signals is known to both, transmitter and receiver, and hence the receiver can estimate the channel by comparing the decoded received reference signal to the known data of a reference signal. Standards usually define locations of reference signals/symbols simply as a list so in case of various FFT-lengths a standard may define the locations for each FFT-length separately. However, improvements are needed for achieving flexible and dynamic combination of various FFT-lengths in an OFDM system.

### SUMMARY

According to certain embodiments a method, for a receiving device, comprises receiving a signal comprising at least one reference symbol on a subcarrier using a second FFT-length configuration, frequency shifting the at least one reference symbol from the subcarrier of the first FFT-length configuration to a subcarrier of a second FFT-length configuration, processing the signal using the second FFT-length configuration and extracting the at least one reference symbol from the signal on the subcarrier of the second FFT-length configuration.

According to certain embodiments, a computer program product may be configured to control an apparatus to perform a process according to the method.

According to certain embodiments, an apparatus may comprise means for performing the method.

### BRIEF DESCRIPTION OF THE DRAWINGS

For a more complete understanding of example embodiments of the present invention, reference is now made to the following descriptions taken in connection with the accompanying drawings in which:
Fig. 1 illustrates an example of a communication system;
Fig. 2 illustrates a first frequency shifting process in accordance with some embodiments of the invention;
Fig. 3 illustrates a second frequency shifting process in accordance with some embodiments of the invention;
Fig. 4 illustrates operation of a receiver in accordance with some embodiments of the invention;
Fig. 5 illustrates a flowchart of a method in accordance with some embodiments of the invention;
Fig. 6 illustrates an apparatus in accordance with embodiments of the invention.

### DETAILED DESCRIPTION

Embodiments of the invention relate to reception of reference signals in a communication system using various Fast Fourier Transform, FFT, -lengths and provide a solution for achieving flexible and dynamic combination of various FFT-lengths especially for communication systems which are based on Orthogonal Frequency Division Multiplexing, OFDM.

In the following, different exemplifying embodiments will be described using as examples of communication systems in which the embodiments may be applied, a radio access architecture based on Long Term Evolution, LTE, and New Radio, NR, (i.e. 5G), without restricting the embodiments to such systems. It is obvious for a person skilled in the art that the embodiments may also be applied to other kinds of wireless communications systems by adjusting parameters and procedures appropriately. Some examples of other options for suitable wireless systems are Wireless Local Area Network, WLAN and Worldwide Interoperability for Microwave Access, WiMAX, Wireless Personal Area Network, WPAN, mobile ad-hoc networks, MANETs, and terrestrial radio and television broadcasting or any combination thereof. The embodiments of the invention may also be applied to different wired/fixed communication systems such as, for example, Asymmetric Digital Subscriber Line, ADSL, or powerline technology.

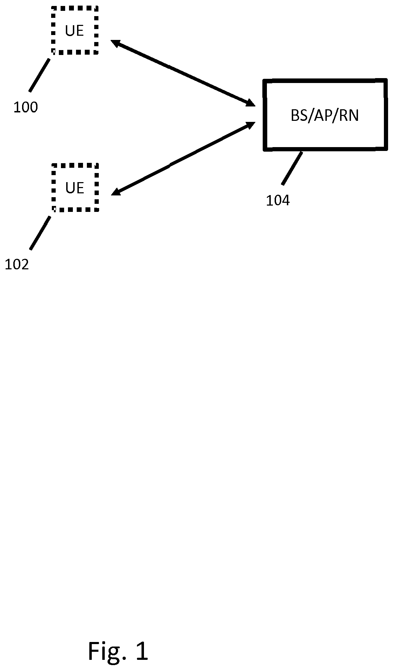

Fig. 1 depicts an example of a communication system, showing some elements and functional entities, all being logical units, whose implementation may differ from what is shown. The connections shown in Fig. 1 are logical connections and the actual physical connections may be different. It is apparent to a person skilled in the art that the system typically comprises also other functions and structures than those shown in Fig. 1. The embodiments are not, however, restricted to the system given as an example but a person skilled in the art may apply the solution to other communication systems provided with necessary properties.

The example of Fig. 1 shows a part of an exemplifying radio access network. Fig. 1 shows User Equipments, UEs, (100, 102) configured to be in a wireless connection on one or more communication channels in a cell with a base station, BS, (104), such as eNodeB in the context of LTE or gNB in the context of 5G/NR. The physical link from a UE to a BS is called uplink or reverse link and the physical link from the BS to the UE is called downlink or forward link. It should be appreciated that BSs or their functionalities may be implemented by using any node, host, server or access point etc. entity suitable for such a usage.

A communications system typically comprises more than one BSs in which case the BSs may also be configured to communicate with one another over links, wired or wireless, designed for the purpose. These links may be used for signaling purposes. The BS may also be referred to as an Access Point, AP, or any other type of interfacing device including a Relay Node, RN, capable of operating in a wireless environment. The BS includes or is coupled to transceivers. From the transceivers of the BS, a connection is provided to an antenna unit that establishes bi-directional radio links to user devices. The antenna unit may comprise a plurality of antennas or antenna elements. The BS is further connected to a core network (not shown in Fig. 1). The UE illustrates one type of an apparatus to which resources on the air interface are allocated and assigned, and thus any feature described herein with a UE may be implemented with a corresponding apparatus, such as a RN. The UE may also be called a subscriber unit, mobile station, remote terminal, access terminal or user terminal, just to mention a few alternatives.

Orthogonal Frequency Division Multiplexing, OFDM, is used in different communication systems for multicarrier transmissions. In OFDM, a channel is divided into a number of orthogonal subcarriers, and the frequencies of the subcarriers are equally and minimally spaced for optimal bandwidth efficiency. The number of subcarriers determines the length, i.e., size, of the Fast Fourier Transform, FFT. Moreover, in OFDM the Inverse Fast Fourier Transform, IFFT, is used at a transmitter for creating an OFDM signal and FFT is then used at a receiver.

In many communication systems reference signals and symbols are used for channel estimation. In case of OFDM systems, if a system supports various FFT-length, or size, configurations it may be desirable to find a way to make reference symbols of a first FFT-length configuration visible also for the use of a second FFT-length configuration. For example, if the first FFT-length configuration is 2048 and the second FFT-length configuration is 512, the reference symbols of the first FFT-length configuration may not match to the subcarrier spacing of the second FFT-length configuration. Such a mismatch may happen, e.g., if the reference symbol locations of LTE (with the FFT-length configuration of 2048) are used, because in LTE the distance between reference symbols in terms of number of subcarriers is 6.

Hence, the LTE reference symbols are not always carried on subcarriers with an index number equal to a power of 2 and consequently only some reference symbols would be visible when the second FFT-length configuration is used. Therefore some of the reference symbols of the first FFT-length configuration (LTE) would not be visible in a system using a smaller FFT-length configuration when same bandwidth is used. According to embodiments of the invention the reference symbols that are not visible in the system using a smaller FFT-length configuration may be shifted in frequency to a subcarrier that is visible in the system using the smaller FFT-length configuration at a receiver, even though a transmitter would transmit the reference symbols according to the first FFT-length configuration. Thus certain embodiments of the invention provide on-demand combination of several FFT-length configurations for a specific bandwidth.

The following provides examples of how this could be achieved. In an embodiment some, or all, reference symbols of a first FFT-length configuration may be shifted in frequency, e.g., one-by-one to a fixed subcarrier of a second FFT-length configuration, wherein the second FFT-length configuration is smaller than the first FFT-length configuration. In another embodiment all reference symbols of a first FFT-length configuration that would not be visible in a second FFT-length configuration may be shifted, e.g., one-by-one, to a subcarrier of a second FFT-length configuration which is closest to a subcarrier of the first FFT-length configuration in question. The second FFT-length configuration may be called as a reduced FFT-length configuration compared to the first FFT-length configuration. In some embodiments a reference symbol may refer to a common reference symbol.

In both embodiments it may be desirable to define reference symbol locations in a system using the second FFT-length configuration by using reference symbol locations of a system using the first FFT-length configuration. In some embodiments the first system may be LTE and the second system may be 5G/NR, for example. However, in some embodiments the first and the second systems may be the same, e.g., 5G/NR. Hence the invention generally applies to OFDM systems and it enables the use of various FFT-length configurations within one such system or for two or more systems.

As a starting point, there may be one or more reference symbols associated with a first FFT-length configuration. An apparatus, such as a UE or a BS, may determine locations of the one or more reference symbols in the first FFT-length configuration, based on a standard for example. That is to say, the locations of the one or more reference symbols in the first FFT-length configuration may be defined in a standard, such as, in a 3GPP standard. In some embodiments the 3GPP standard may be called as LTE or 5G/NR. The locations of the one or more reference symbols in the first FFT-length configuration may correspond to subcarriers of the first FFT-length configuration.

For example, in LTE systems FFT-length configuration of 2048 is used and the locations of the reference symbols are defined as a set for 8 Resource Blocks, RBs, {2, 8, 14, 20, 26, 32, 38, 44, 50, 56, 62, 68, 74, 80, 86, 92}, wherein each index, i.e., location, refers to a subcarrier in the first FFT-length configuration and each resource block comprises 12 subcarriers. Thus for LTE 16 locations for reference symbols are defined per 8 RBs.

According to an example a transmitter may transmit standard LTE common reference symbols, which are required by the standard to be present across the overall bandwidth. So even if only every second subcarrier would be used in a specified bandwidth part, corresponding to a reduced FFT length configuration of 1024 compared to FFT configuration of 2048 of the LTE system, the reference symbols of LTE would still be transmitted according to the LTE standard. However, due to the modulo 6 operation of the reference symbols in frequency domain in LTE, a receiver using FFT length configuration of 1024 may be unaware of some of these reference symbols. A frequency shift operation is hence introduced in the receiver to make the invisible reference symbols, which are necessarily present common reference symbols, accessible for the receiver using the reduced FFT length configuration.

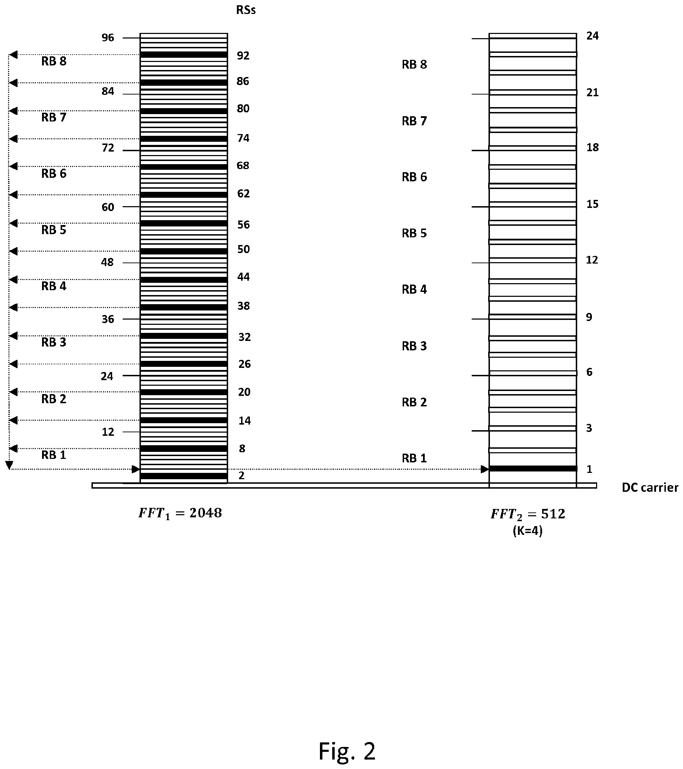

In a first embodiment, frequency shifting may comprise shifting the first reference symbol from the location in the first FFT -length configuration to a predetermined subcarrier of the second FFT-length configuration. Fig. 2 demonstrates the frequency shift operation for the embodiment, when the first FFT-length configuration is 2048 and the second FFT-length configuration is 512. Same bandwidth is applicable for both FFT-length configurations. In the example of Fig. 2 the reference symbol structure of LTE is used for the first FFT-length configuration and hence the distance between reference symbols is 6 subcarriers, starting from the second subcarrier. In some embodiments the second FFT-length configuration may be used for example in a 5G/NR system.

In Fig. 2 the subcarriers with a reference symbol are illustrated as boxes, filled with black, and the subcarriers without a reference symbol are illustrated as boxes that are not filled. The subcarriers and reference symbols for the first FFT-length configuration are shown on the left side of Fig. 2 while the subcarriers and reference symbols for the second FFT-length configuration are shown on the right side. Dashed arrows that begin from the subcarriers with a reference symbol denote the frequency shifting operation, which in the example of Fig. 2 leads to shifting all of the reference symbols of the first FFT-length configuration to a single subcarrier in the second FFT-length configuration. The single subcarrier may be predetermined, e.g., in a standard.

As shown in Fig. 2, according to this embodiment all of the reference signals of the first FFT-length configuration may be shifted in frequency to the single subcarrier in the second FFT-length configuration. In the example of Fig. 2 all the reference symbols are frequency shifted to the first subcarrier of the second FFT-length configuration above the Direct Current, DC, carrier (i.e. the zero frequency or the nominal carrier frequency) which in this example corresponds to the subcarrier 4 of the first FFT-length configuration. Nevertheless, in some embodiments all of the reference signals may be frequency shifted to some other subcarrier of the second FFT-length configuration, such as, for example, any of the subcarriers 3, 6, 9, 12, 15, 18, 21 or 24 shown in Fig. 2.

In a second embodiment, locations of one or more reference symbols in a second FFT-length configuration may be determined based on the locations of the one or more reference symbols in the first FFT-length configuration. In other words, a device may determine on which subcarrier of the second FFT-length configuration a reference symbol is to be processed based on which subcarrier of the first FFT-length configuration the reference symbol is to be received. The device may thus exploit the location of the reference symbol in the first FFT-length configuration for figuring out the corresponding location in the second FFT-length configuration.

The device may compare the location of the reference symbol in the first FFT-length configuration to subcarrier locations of the second FFT-length configuration. If the location of the reference symbol in the first FFT-length configuration matches a subcarrier in the second FFT-length configuration, then the location of the reference symbol remains the same in the second FFT-length configuration as in the first FFT-length configuration. That is to say, the reference symbol is visible in the second FFT-length configuration and a subcarrier of the second FFT-length configuration which corresponds to the location of the reference symbol in the first FFT-length configuration may be used for processing the reference symbol. Hence there is no need to frequency shift the reference symbol in this case.

However, if the location of the reference symbol in the first FFT-length configuration does not match any of the subcarriers in the second FFT-length configuration, then the location of the reference symbol should be shifted in frequency in the second FFT-length configuration compared to location in the first FFT-length configuration. That is to say, the reference symbol would not be visible in the second FFT-length configuration without frequency shifting the reference symbol.

In some embodiments the device may check the location of each reference symbol individually. This may be done using a modulo operation for example. However, the invention is not limited to the use of the modulo operation and other means may be used for checking whether a reference symbol of the first FFT-length configuration needs to be frequency shifted to another location for reception according to the second FFT-length configuration. For example, an index to a lookup table may be used instead of the modulo operation. The location of the reference symbol may be compared to subcarrier locations of a second FFT-length configuration using the modulo operation or any other means.

If a modulo operation is used for checking whether a reference symbol of the first FFT-length configuration needs to be frequency shifted to another location for reception using the second FFT-length configuration, and the subcarrier in question is denoted by index n , the modulo operation may be defined as follows $mod \left(\frac{n}{K}\right) \neq 0$ (1), wherein *K* = *FFT*₁/*FFT*₂, and *FFT*₁ is the first FFT-length configuration and *FFT*₂ is the second FFT-length configuration. Checking may be done for all the reference symbols of the first FFT-length configuration. For example, if there are 16 reference symbols in the first FFT-length configuration, all the 16 reference symbols may be checked.

So according to this example, if the modulo operation for the subcarrier in question, with index n, equals to zero, then the device may be configured to receive the reference symbol in the location, or subcarrier, of the at least one reference symbol in the first FFT -length configuration using the second FFT-length configuration. The reference symbol is already visible in the second FFT-length configuration and hence there is no need for frequency shifting the location for receiving using the second FFT-length configuration. That is to say, the device may be configured to not to frequency shift the reference symbol for reception in such a case. Hence a receiving device may be configured to process the reference symbol in the location of the at least one reference symbol in the first FFT -length configuration using the second FFT-length configuration.

On the other hand, according to this example, if the modulo operation for the subcarrier in question, with index n, does not equal to zero, then the device may be configured to frequency shift the at least one first reference symbol from the location in the first FFT -length configuration to a subcarrier of the second FFT-length configuration. The device may further be configured to receive the reference signal on the frequency shifted location. The reference symbol is not visible in the second FFT-length configuration without frequency shifting and hence there is a need for frequency shifting the location for processing the second FFT-length configuration. A receiving device may be configured to process the reference symbol using the second FFT-length configuration in the frequency shifted location compared to the location of the reference symbol in the first FFT -length configuration.

In some embodiments the location of the frequency shifted reference symbol may be defined in the second FFT-length configuration using a rounding function, which replaces an arbitrary number with an integer (rounding to an integer). The rounding function may be used to frequency shift the reference symbol in question to a closest subcarrier of the second FFT-length configuration.

In some embodiments rounding to a nearest integer may be used. Moreover, in some embodiments a rounding up function (take the ceiling, rounding towards plus infinity), together with rounding to an integer, may be used as follows $n ′ = ⌈ \frac{n}{K} ⌉$ (2), wherein n' denotes the index of a subcarrier in the second FFT-length configuration. In some other embodiments a rounding down function (take the floor, rounding towards zero), together with rounding to an integer, may be used.

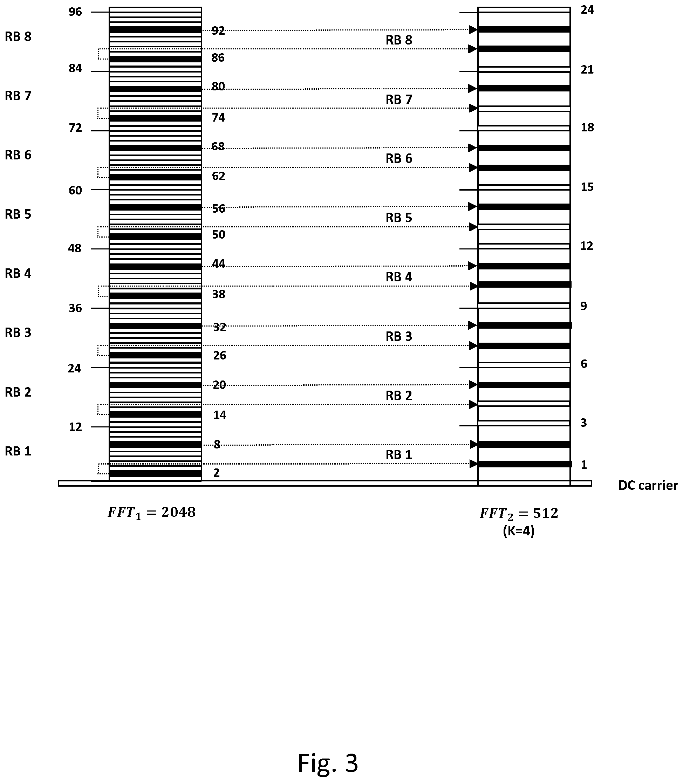

Fig. 3 demonstrates the frequency shift operation for the second embodiment, when the first FFT-length configuration is 2048 and the second FFT-length configuration is 512. Fig. 3 shows the frequency shifts for the rounding up function, i.e., all the frequency shifts are made taking the ceiling. As can be seen from Fig. 3, certain reference symbols of the first FFT-length configuration do not need to be shifted in frequency in this example, i.e., some of the reference symbols may be received on the same frequency using the second FFT-length configuration. However, it should be noted that the numbering of the subcarriers changes on the right side of Fig. 3 according to the second FFT-length configuration so that for example the reference symbol on subcarrier 8 of the first FFT-length is carried on subcarrier 2 of the second FFT-length configuration, even though these subcarriers are on the same frequency. Similarly, the reference symbol on subcarrier 20 is carried on subcarrier 5 of the second FFT-length configuration on the same frequency.

Table 1 provides the mapping between the subcarriers of the reference symbols of the first FFT-length configuration and the subcarriers of the reference symbols of the second FFT-length configuration. As the rounding to a nearest integer function is used together with rounding up function in the example of Fig. 3, Table 1 shows the mapping for that without parentheses while the mapping for the rounding to a nearest integer function with the rounding down function is shown in parentheses (not shown in Fig. 3).

**Table 1 Frequency shift operation for FFT₁ = 2048 LTE and FFT₂ = 512**

| Subcarrier index for reference symbols in *FFT*₁ | Shifted subcarrier index for reference symbols in *FFT*₁ | Shifted subcarrier index for reference signals in *FFT*₂ |
|---|---|---|
| 2 | 4 | 1 |
| 8 | 8 | 2 |
| 14 | 16 | 4 |
| | (12) | (3) |
| 20 | 20 | 5 |
| 26 | 28 | 7 |
| | (24) | (6) |
| 32 | 32 | 8 |
| 38 | 40 | 10 |
| | (36) | (9) |
| 44 | 44 | 11 |
| 50 | 52 | 13 |
| | (48) | (12) |
| 56 | 56 | 14 |
| 62 | 64 | 16 |
| | (60) | (15) |
| 68 | 68 | 17 |
| 74 | 76 | 19 |
| | (72) | (18) |
| 80 | 80 | 20 |
| 86 | 88 | 22 |
| | (84) | (21) |
| 92 | 92 | 23 |

Similarly, Table 2 provides the mapping between the subcarriers of the reference symbols of the first FFT-length configuration and the subcarriers of the reference symbols of the second FFT-length configuration when the first FFT-length configuration is 2048 and the second FFT-length configuration is 256. In Table 2 also the mapping, for the use of rounding to a nearest integer function together with rounding up function, is shown without parentheses while the mapping for the rounding to a nearest integer function with the rounding down function is shown in parentheses.

**Table 2 Frequency shift operation for FFT₁ = 2048 LTE and FFT₂ = 256**

| Subcarrier index for reference symbols in *FFT*₁ | Shifted subcarrier index for reference symbols in *FFT*₁ | Shifted subcarrier index for reference signals in *FFT*₂ |
|---|---|---|
| 2 | 8 | 1 |
| 8 | 8 | 1 |
| 14 | 16 | 2 |
| 20 | 24 | 3 |
| | (16) | (2) |
| 26 | 24 | 3 |
| 32 | 32 | 4 |
| 38 | 40 | 5 |
| 44 | 48 | 6 |
| | (40) | (5) |
| 50 | 48 | 6 |
| 56 | 56 | 7 |
| 62 | 64 | 8 |
| 68 | 72 | 9 |
| | (64) | (8) |
| 74 | 72 | 9 |
| 80 | 80 | 10 |
| 86 | 88 | 11 |
| 92 | 96 | 12 |
| | (88) | (11) |

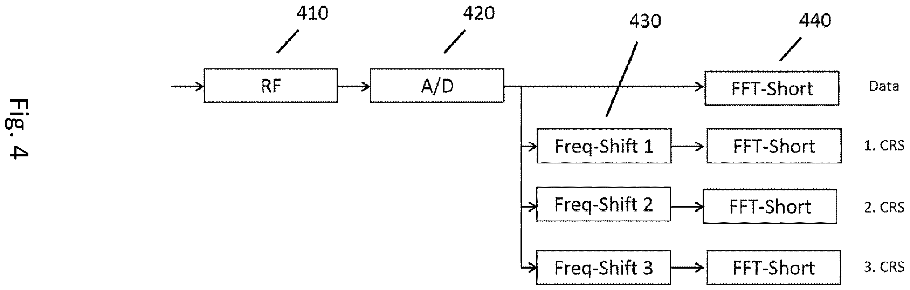

Fig. 4 illustrates operation of a receiver according to certain embodiments of the invention. The receiver may comprise a Radio Frequency, RF, block (410) and Analog-to-Digital, A/D, block (420). The RF block (410) may perform tasks in analog domain and it may further comprise functions like frequency down conversion to baseband, power amplification and signal processing functions like analog signal equalization. The A/D block (420) may convert a signal to digital domain. In some embodiments, this step may result in blocks of complex samples corresponding to a FFT-length configuration, e.g., 2048 for a long FFT-length configuration and 512 for a short FFT-length configuration. It may be assumed that the device is restricted to the use of the short FFT-length configuration. It needs to be noted, that at this point the signal is still in time domain, which is important for the frequency shift operation as well as the FFT-operation.

Signal blocks, or signal vectors, of 512 samples as described in the preceding paragraph, may be processed in many ways, exploiting all the functionalities available in digital domain. However, as a starting point there may be 512 samples. So, depending on the processing chain available, this may be done in parallel, as shown in Fig. 4. Nevertheless, another option is to do this in a serial manner.

As depicted in Fig. 4, there may be a standard data path without any frequency shift operation. This path may represent the basic operation of any device based on a short FFT operation. However, in some situations Common Reference Symbols, CRSs, may not be visible in the data signal, due to the modulo 6 spacing of the CRSs in frequency in LTE systems for example. According to certain embodiments a dedicated signal processing path/block (430) may be established for every CRS. Each of these paths/blocks (430) may incorporate a dedicated frequency shift operation and the standard short FFT operation.

Said frequency shift operation may be implemented in digital time domain via multiplication of individual signal vector elements with appropriate e^{-j2ΠΔfΔt} terms. It is important to note, that this frequency shift operation is specific per path/block (430), specific per CRS. The frequency shifted signal is then further processed via the standard short FFT operation (440).

The data path uses all 512 subcarriers that the short FFT operation may yield. On the other hand, the CRS paths may be related only to a subcarrier position, or location, wherein a certain CRS is. Therefore, an extraction step (not shown in Fig. 4) may be needed, which may yield the frequency shifted CRS at the position in the signal vector in frequency domain according to an index. Said index may correspond to the frequency shifted location.

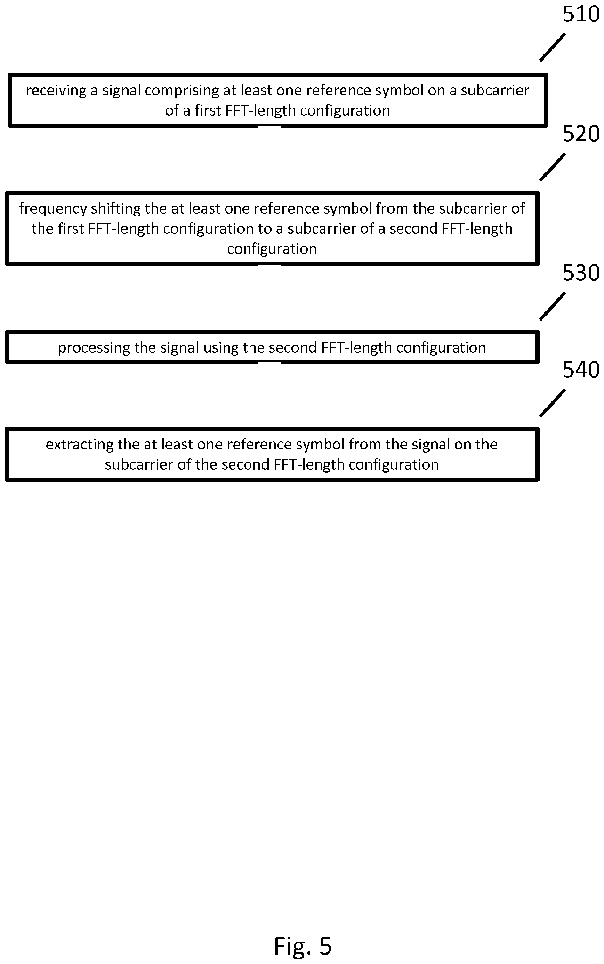

Fig. 5 illustrates a method according to certain embodiments of the invention. The method may be suitable for a receiving device. In the context of wireless networks the receiving device may be a user equipment, such as a mobile station etc., but in the context of fixed or optical networks the receiving device may be named differently. Hence the method may be performed by any device applicable to OFDM systems and the device may be capable of supporting the use of various FFT-lengths, i.e., multiple FFT-sizes. That is to say, the method may be suitable for receiving an OFDM signal.

The method may include, at step 510, receiving a signal comprising at least one reference symbol on a subcarrier of a first FFT-length configuration. The method may also include, at step 520, frequency shifting the at least one reference symbol from the subcarrier of the first FFT-length configuration to a subcarrier of a second FFT-length configuration. Furthermore, the method may include, at step 530, processing the signal using the second FFT-length configuration and, at step 540, extracting the at least one reference symbol from the signal on the subcarrier of the second FFT-length configuration. The extracted reference symbol may be used for channel estimation.

The method may also include receiving, by a user equipment, the at least one reference symbol from a network node for channel estimation and estimating a channel based on the at least one reference symbol.

In some embodimens the at least one reference symbol may be received at a location of the at least of one reference symbol in the first FFT-length configuration in frequency. Said location of the subcarrier of the second FFT-length configuration may be different in frequency compared to the location of the at least one reference symbol in the first FFT-length configuration. In addition, or alternatively, the second FFT-length configuration may be shorter, or smaller, than the first FFT-length configuration. For example, the first FFT-length configuration may be 2048 while the second FFT-length configuration may be 256, 512 or 1024.

Moreover, in some embodiments the frequency shifting may comprise shifting to a location which may be a predetermined subcarrier of the second FFT-length configuration. Alternatively, in some embodiments the frequency shifting may comprise shifting to a location which is a closest subcarrier in frequency of the second FFT -length configuration. The closest subcarrier in frequency may be determined using a rounding function.

The method may include determining the location of the at least one reference symbol in the first Fast Fourier Transform, FFT, -length configuration. In some embodiments the location of the at least one reference symbol in the first FFT-length configuration may be an index of a subcarrier in the first FFT-length configuration. The determining may be based on a standard, such as a 3GPP standard, wherein locations of reference symbols are defined in terms of subcarrier indexes.

According to the method the location of the subcarrier of the second FFT-length configuration may be an index of the subcarrier in the second FFT-length configuration. Similarly, the location of the the at least one reference symbol in the first FFT-length configuration may be a subcarrier, or an index of the subcarrier, in the first FFT-length configuration.

The location of the subcarrier of the second FFT-length configuration may be denoted by n' and the location of the at least one reference symbol in the first FFT-length configuration may be denoted by n. Then the relationship between the location of the at least one reference symbol in the first FFT-length configuration and the location of the subcarrier of the second FFT-length configuration may be defined using the FFT-lengths such that $n ′ = \frac{n}{K} ,$ wherein *K* = *FFT*₁/*FFT*₂, and *FFT*₁ is the first FFT-length configuration and *FFT*₂ is the second FFT-length configuration. It is noted that *n*' is not always an integer, which means that in such a case there is no corresponding location in the second FFT-length configuration for a certain location in the first FFT-length configuration. That is to say, there is no corresponding subcarrier in the second FFT-length configuration for a certain subcarrier in the first FFT-length configuration.

In addition, the method may also include comparing locations of reference symbols of the first FFT -length configuration to locations of subcarriers of the second FFT-length configuration, and configuring, based on the comparison, the receiving device for extracting the reference symbols on the subcarriers of the second FFT-length configuration. The method may also include extracting the reference symbols on the subcarriers of the second FFT-length configuration, for example, for channel estimation.

In some embodiments, frequency shifting first reference symbols, for which the comparison indicates that there is no corresponding subcarrier in the second FFT-length configuration, to a subcarrier of the second FFT-length configuration and extracting the first reference symbols, and extracting second reference symbols, for which the comparison indicates that there is a corresponding subcarrier in the second FFT-length configuration, on the locations of the first FFT-length configuration using the second FFT-length configuration. The reference symbols may be extracted for channel estimation.

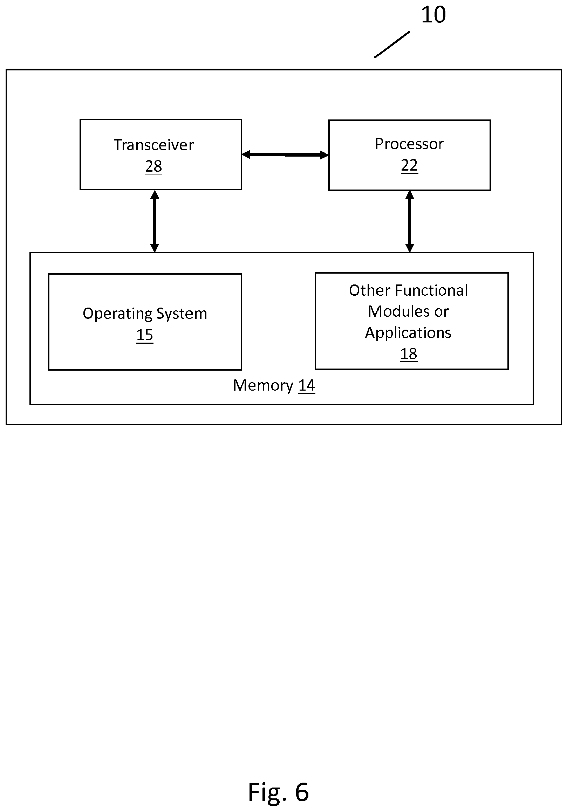

Fig. 6 illustrates an apparatus (10) according to embodiments of the invention. Apparatus (10) may be a wireless device, such as a user equipment, for example. In other embodiments, apparatus (10) may be a base station, access point, software defined network, SDN controller, cloud base station controller, or centralized base station controller, for example.

A wireless device or user equipment may be a mobile station, MS, such as a mobile phone or smart phone or multimedia device, a computer, such as a tablet, provided with wireless communication capabilities, personal data or digital assistant, PDA, provided with wireless communication capabilities, portable media player, digital camera, pocket video camera, navigation unit provided with wireless communication capabilities or any combinations thereof. The wireless device or user equipment may be a sensor or smart meter, or other device that may usually be configured for a single location. Additionally, the wireless device or user equipment may be a device-to-device user equipment or a device for machine-type-communications.

Apparatus (10) may comprise a processor (22) for processing information and executing instructions or operations. Processor (22) may be any type of general or specific purpose processor. While a single processor (22) is shown in Fig. 6, multiple processors may be utilized according to other embodiments. Processor (22) may also comprise one or more of general-purpose computers, special purpose computers, microprocessors, digital signal processors, DSPs, field-programmable gate arrays, FPGAs, application-specific integrated circuits, ASICs, and processors based on a multi-core processor architecture, as examples.

Apparatus (10) may further comprise a memory (14), coupled to processor (22), for storing information and instructions that may be executed by processor (22). Memory (14) may be one or more memories and of any type suitable to the local application environment, and may be implemented using any suitable volatile or nonvolatile data storage technology such as a semiconductor-based memory device, a magnetic memory device and system, an optical memory device and system, fixed memory, and removable memory. For example, memory (14) may be comprised of any combination of random access memory, RAM, read only memory, ROM, static storage such as a magnetic or optical disk, or any other type of non-transitory machine or computer readable media. The instructions stored in memory (14) may comprise program instructions or computer program code that, when executed by processor (22), enable the apparatus (10) to perform tasks as described herein.

Apparatus (10) may also comprise one or more antennas (not shown) for transmitting and/or receiving signals and/or data to and from apparatus (10). Apparatus (10) may further comprise a transceiver (28) that modulates information on to a carrier waveform for transmission by the antenna(s) and demodulates information received via the antenna(s) for further processing by other elements of apparatus (10). In other embodiments, transceiver (28) may be capable of transmitting and receiving signals or data directly.

Processor (22) may perform functions associated with the operation of apparatus (10) comprising, without limitation, precoding of antenna gain/phase parameters, encoding and decoding of individual bits forming a communication message, formatting of information, and overall control of the apparatus (10), comprising processes related to management of communication resources.

In certain embodiments, memory (14) stores software modules that provide functionality when executed by processor (22). The modules may comprise an operating system (15) that provides operating system functionality for apparatus (10). The memory may also store one or more functional modules (18), such as an application or program, to provide additional functionality for apparatus (10). The components of apparatus (10) may be implemented in hardware, or as any suitable combination of hardware and software.

The described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

Moreover, one having ordinary skill in the art will readily understand that the invention as discussed above may be practiced with steps in a different order, and/or with hardware elements in configurations which are different than those which are disclosed.

In an exemplary embodiment, an apparatus, such as a user equipment or base station, may comprise means for carrying out embodiments described above and any combination thereof.

In another exemplary embodiment, a computer program product may be configured to control an apparatus to perform a process according to embodiments described above and any combination thereof. The computer program product may be embodied on a non-transitory computer readable medium.

## Claims

1. A method for a receiving device, comprising,
receiving a signal comprising at least one reference symbol on a subcarrier of a first FFT-length configuration (510);
**characterized by**
frequency shifting the at least one reference symbol from the subcarrier of the first FFT-length configuration to a subcarrier of a second FFT-length configuration (520);
processing the signal using the second FFT-length configuration (530); and
extracting the at least one reference symbol from the signal on the subcarrier of the second FFT-length configuration (540).

2. A method according to claim 1, further comprising,
receiving, by a user equipment, the at least one reference symbol from a network node for channel estimation; and
estimating a channel based on the at least one reference symbol.

3. A method according to claim 1 or 2, wherein the at least one reference symbol is received at a location of the at least of one reference symbol in the first FFT-length configuration in frequency.

4. A method according to any of the preceding claims, wherein the frequency shifting comprises shifting to a location which is a predetermined subcarrier of the second FFT-length configuration.

5. A method according to any of claims 1 to 3, wherein the frequency shifting comprises shifting to a location which is a closest subcarrier of the second FFT - length configuration in frequency.

6. A method according to claim 5, wherein the closest subcarrier in the second FFT-length configuration is determined using a rounding function.

7. A method according to any of the preceding claims, further comprising,
comparing location of the at least one reference symbol of the first FFT -length configuration to locations of subcarriers of the second FFT-length configuration;
configuring, based on the comparison, the receiving device for extracting the at least one reference symbol on the subcarriers of the second FFT-length configuration; and
extracting the at least one reference symbol on the subcarriers of the second FFT-length configuration.

8. An apparatus, comprising,
means for receiving a signal comprising at least one reference symbol on a subcarrier of a first FFT-length configuration (510);
**characterized by**
means for frequency shifting the at least one reference symbol from the subcarrier of the first FFT-length configuration to a subcarrier of a second FFT-length configuration (520);
means for processing the signal using the second FFT-length configuration (530); and
means for extracting the at least one reference symbol from the signal on the subcarrier of the second FFT-length configuration (540).

9. An apparatus according to claim 8, further comprising,
means for receiving, by a user equipment, the at least one reference symbol from a network node for channel estimation; and
means for estimating a channel based on the at least one reference symbol.

10. An apparatus according to claim 8 or 9, wherein the at least one reference symbol is received at a location of the at least of one reference symbol in the first FFT-length configuration in frequency.

11. An apparatus according to any of claims 8 to 10, wherein the frequency shifting comprises shifting to a location which is a predetermined subcarrier of the second FFT-length configuration.

12. An apparatus according to any of claims 8 to 10, wherein the frequency shifting comprises shifting to a location which is a closest subcarrier of the second FFT -length configuration in frequency.

13. An apparatus according to claim 12, wherein the apparatus is adapted for determining the closest subcarrier in the second FFT-length configuration using a rounding function.

14. An apparatus according to any of claims 8 to 13, wherein the apparatus is adapted for comparing location of the at least one reference symbol of the first FFT -length configuration to locations of subcarriers of the second FFT-length configuration;
configuring, based on the comparison, the receiving device for extracting the at least one reference symbol on the subcarriers of the second FFT-length configuration; and
extracting the at least one reference symbol on the subcarriers of the second FFT-length configuration.

15. A computer program product configured to control an apparatus to perform a process according to the method of any of claims 1-7.

## Patentansprüche

1. Verfahren für eine Empfangsvorrichtung, das Folgendes umfasst,
Empfangen eines Signals, das mindestens ein Referenzsymbol umfasst, auf einem Unterträger einer ersten FFT-Längenauslegung (510);
**gekennzeichnet durch**
Frequenzverschieben des ersten Referenzsymbols vom Unterträger der ersten FFT-Längenauslegung zu einem Unterträger einer zweiten FFT-Längenauslegung (520);
Verarbeiten des Signals unter Verwendung der zweiten FFT-Längenauslegung (530); und
Extrahieren des mindestens einen Referenzsymbols aus dem Signal auf dem Unterträger der zweiten FFT-Längenauslegung (540).

2. Verfahren nach Anspruch 1, das ferner Folgendes umfasst,
Empfangen des mindestens einen Referenzsymbols durch eine Teilnehmereinrichtung von einem Netzwerkknoten für eine Kanalschätzung; und
Schätzen eines Kanals auf Basis des mindestens einen Referenzsymbols.

3. Verfahren nach Anspruch 1 oder 2, wobei das mindestens eine Referenzsymbol hinsichtlich der Frequenz an einem Ort des mindestens von einem Referenzsymbol in der ersten FFT-Längenauslegung empfangen wird.

4. Verfahren nach einem der vorhergehenden Ansprüche, wobei das Frequenzverschieben das Verschieben zu einem Ort, der ein vorbestimmter Unterträger der zweiten FFT-Längenauslegung ist, umfasst.

5. Verfahren nach einem der Ansprüche 1 bis 3, wobei das Frequenzverschieben das Verschieben zu einem Ort, der hinsichtlich der Frequenz ein nächster Unterträger der zweiten FFT-Längenauslegung ist, umfasst.

6. Verfahren nach Anspruch 5, wobei der nächste Unterträger in der zweiten FFT-Längenauslegung unter Verwendung einer Rundungsfunktion bestimmt wird.

7. Verfahren nach einem der vorhergehenden Ansprüche, das ferner Folgendes umfasst,
Vergleichen des Ortes des mindestens einen Referenzsymbols der ersten FFT-Längenauslegung mit Orten von Unterträgern der zweiten FFT-Längenauslegung;
Auslegen der Empfangsvorrichtung zum Extrahieren des mindestens einen Referenzsymbols auf den Unterträgern der zweiten FFT-Längenauslegung auf Basis des Vergleichs; und
Extrahieren des mindestens einen Referenzsymbols auf den Unterträgern der zweiten FFT-Längenauslegung.

8. Einrichtung, die Folgendes umfasst,
Mittel zum Empfangen eines Signals, das mindestens ein Referenzsymbol umfasst, auf einem Unterträger einer ersten FFT-Längenauslegung (510);
**gekennzeichnet durch**
Mittel zum Frequenzverschieben des ersten Referenzsymbols vom Unterträger der ersten FFT-Längenauslegung zu einem Unterträger einer zweiten FFT-Längenauslegung (520);
Mittel zum Verarbeiten des Signals unter Verwendung der zweiten FFT-Längenauslegung (530); und
Mittel zum Extrahieren des mindestens einen Referenzsymbols aus dem Signal auf dem Unterträger der zweiten FFT-Längenauslegung (540).

9. Vorrichtung nach Anspruch 8, die ferner Folgendes umfasst,
Mittel zum Empfangen des mindestens einen Referenzsymbols durch eine Teilnehmereinrichtung von einem Netzwerkknoten für eine Kanalschätzung; und
Mittel zum Schätzen eines Kanals auf Basis des mindestens einen Referenzsymbols.

10. Einrichtung nach Anspruch 8 oder 9, wobei das mindestens eine Referenzsymbol hinsichtlich der Frequenz an einem Ort des mindestens von einem Referenzsymbol in der ersten FFT-Längenauslegung empfangen wird.

11. Einrichtung nach einem der Ansprüche 8 bis 10, wobei das Frequenzverschieben das Verschieben zu einem Ort, der ein vorbestimmter Unterträger der zweiten FFT-Längenauslegung ist, umfasst.

12. Einrichtung nach einem der Ansprüche 8 bis 10, wobei das Frequenzverschieben das Verschieben zu einem Ort, der hinsichtlich der Frequenz ein nächster Unterträger der zweiten FFT-Längenauslegung ist, umfasst.

13. Einrichtung nach Anspruch 12, wobei die Einrichtung zum Bestimmen des nächsten Unterträgers in der zweiten FFT-Längenauslegung unter Verwendung einer Rundungsfunktion angepasst ist.

14. Einrichtung nach einem der Ansprüche 8 bis 13, wobei die Einrichtung zu Folgendem angepasst ist
Vergleichen des Ortes des mindestens einen Referenzsymbols der ersten FFT-Längenauslegung mit Orten von Unterträgern der zweiten FFT-Längenauslegung;
Auslegen der Empfangsvorrichtung zum Extrahieren des mindestens einen Referenzsymbols auf den Unterträgern der zweiten FFT-Längenauslegung auf Basis des Vergleichs; und
Extrahieren des mindestens einen Referenzsymbols auf den Unterträgern der zweiten FFT-Längenauslegung.

15. Computerprogrammprodukt, das dazu ausgelegt ist, eine Einrichtung zu steuern, um einen Prozess gemäß dem Verfahren nach einem der Ansprüche 1-7 durchzuführen.

## Revendications

1. Procédé pour un dispositif de réception, comprenant,
la réception d'un signal comprenant au moins un symbole de référence sur une sous-porteuse d'une première configuration de longueur FFT (transformation de Fourier rapide) (510) ;
**caractérisé par**
un décalage de fréquence de l'au moins un symbole de référence, de la sous-porteuse de la première configuration de longueur FFT à une sous-porteuse d'une deuxième configuration de longueur FFT (520) ;
le traitement du signal en utilisant la deuxième configuration de longueur FFT (530) ; et
l'extraction de l'au moins un symbole de référence du signal sur la sous-porteuse de la deuxième configuration de longueur FFT (540).

2. Procédé selon la revendication 1, comprenant en outre,
la réception, par un équipement d'utilisateur, de l'au moins un symbole de référence à partir d'un nœud de réseau pour une estimation de canal ; et
l'estimation d'un canal sur la base de l'au moins un symbole de référence.

3. Procédé selon la revendication 1 ou 2, dans lequel l'au moins un symbole de référence est reçu à un emplacement de l'au moins un symbole de référence dans la première configuration de longueur FFT en fréquence.

4. Procédé selon l'une quelconque des revendications précédentes, dans lequel le décalage de fréquence comprend le décalage vers un emplacement qui est une sous-porteuse prédéterminée de la deuxième configuration de longueur FFT.

5. Procédé selon l'une quelconque des revendications 1 à 3, dans lequel le décalage de fréquence comprend le décalage vers un emplacement qui est une sous-porteuse la plus proche de la deuxième configuration de longueur FFT en fréquence.

6. Procédé selon la revendication 5, dans lequel la sous-porteuse la plus proche dans la deuxième configuration de longueur FFT est déterminée en utilisant une fonction d'arrondi.

7. Procédé selon l'une quelconque des revendications précédentes, comprenant en outre,
la comparaison de l'emplacement de l'au moins un symbole de référence de la première configuration de longueur FFT aux emplacements de sous-porteuses de la deuxième configuration de longueur FFT ;
la configuration, sur la base de la comparaison, du dispositif de réception pour extraire l'au moins un symbole de référence sur les sous-porteuses de la deuxième configuration de longueur FFT ; et
l'extraction de l'au moins un symbole de référence sur les sous-porteuses de la deuxième configuration de longueur FFT.

8. Appareil, comprenant,
des moyens pour recevoir un signal comprenant au moins un symbole de référence sur une sous-porteuse d'une première configuration de longueur FFT (510) ;
**caractérisé par**
des moyens pour décaler la fréquence de l'au moins un symbole de référence, de la sous-porteuse de la première configuration de longueur FFT à une sous-porteuse d'une deuxième configuration de longueur FFT (520) ;
des moyens pour traiter le signal en utilisant la deuxième configuration de longueur FFT (530) ; et
des moyens pour extraire l'au moins un symbole de référence du signal sur la sous-porteuse de la deuxième configuration de longueur FFT (540).

9. Appareil selon la revendication 8, comprenant en outre,
des moyens pour recevoir, par un équipement d'utilisateur, l'au moins un symbole de référence à partir d'un nœud de réseau pour une estimation de canal ; et
des moyens pour estimer un canal sur la base de l'au moins un symbole de référence.

10. Appareil selon la revendication 8 ou 9, dans lequel l'au moins un symbole de référence est reçu à un emplacement de l'au moins un symbole de référence dans la première configuration de longueur FFT en fréquence.

11. Appareil selon l'une quelconque des revendications 8 à 10, dans lequel le décalage de fréquence comprend le décalage vers un emplacement qui est une sous-porteuse prédéterminée de la deuxième configuration de longueur FFT.

12. Appareil selon l'une quelconque des revendications 8 à 10, dans lequel le décalage de fréquence comprend le décalage vers un emplacement qui est une sous-porteuse la plus proche de la deuxième configuration de longueur FFT en fréquence.

13. Appareil selon la revendication 12, dans lequel l'appareil est adapté pour déterminer la sous-porteuse la plus proche dans la deuxième configuration de longueur FFT en utilisant une fonction d'arrondi.

14. Appareil selon l'une quelconque des revendications 8 à 13, dans lequel l'appareil est adapté pour
comparer un emplacement de l'au moins un symbole de référence de la première configuration de longueur FFT aux emplacements de sous-porteuses de la deuxième configuration de longueur FFT ;
configurer, sur la base de la comparaison, le dispositif de réception pour extraire l'au moins un symbole de référence sur les sous-porteuses de la deuxième configuration de longueur FFT ; et
extraire l'au moins un symbole de référence sur les sous-porteuses de la deuxième configuration de longueur FFT.

15. Produit de programme informatique configuré pour commander un appareil afin de réaliser un processus selon le procédé de l'une quelconque des revendications 1 à 7.
